# EUROPEAN PATENT SPECIFICATION

(11) **EP 0 758 050 B1**
(45) Date of publication and mention of the grant of the patent: **29.12.1999**
(21) Application number: 96110317.3
(22) Date of filing: 26.06.1996
(51) Int. Cl.: F02N 11/00, B62M 7/12, F02B 61/02

(54) **Starter motor mounting/disposing structure in unit swing internal combustion engine**
Struktur zur Anordnung/Positionierung von Anlasser für schwenkbaren Verbrennungsmotor
Structure de montage/positionnement de démarreur pour moteur à combustion interne monté flottant

(30) Priority: 09.08.1995 JP 22280295
(43) Date of publication of application: 12.02.1997
(73) Proprietor: HONDA GIKEN KOGYO KABUSHIKI KAISHA, Minato-ku Tokyo (JP)
(72) Inventor: Yagasaki, Akio, c/o K.K. Honda Gijutsu Kenkyusho, Wako-shi, Saitama (JP); Ishikawa, Hideo, Wako-shi, Saitama (JP)
(74) Representative: Liska, Horst, Dr.-Ing.

(56) References cited:
- PATENT ABSTRACTS OF JAPAN vol. 6, no. 89 (M-132) [27] , 27 May 1982 & JP-A-57 026264 (YAMAHA MOTOR CO), 12 February 1982,

## Description

The present invention relates to a unit swing internal combustion engine in a two-wheeled motor vehicle in which the internal combustion engine, a drive transfer mechanism and the rear wheel are constituted in a unit swing case so as to be vertically swingable with respect to the vehicle body. Particularly, the invention relates to a starter motor mounting/disposing structure.

In this type of a unit swing internal combustion engine, the starter motor is usually disposed outside the unit swing case, as described in Japanese Patent Publication No. Hei 5-68398.

The starter motor mounting/disposing structure described in the said publication is illustrated in Figs. 11 and 12.

A crank shaft 02 is horizontally in right and left disposed in a center of the front portion of a unit swing case 01, and an internal combustion engine 03 is mounted on an upper position of a unit swing case 01 with a cylinder 04 extending upward.

A rear wheel (not shown) is journaled behind the unit swing case 01, and the drive of the crank shaft is transferred to the rear wheel through a belt transfer mechanism.

A hanger bracket 05 is forwardly projecting from the front wall of the unit swing case 01, the front end of which is pivotally connected to the vehicle body frame through a pivot shaft 06. The unit swing case 01 is vertically swingable about the pivot shaft 06 together with the rear wheel, with a buffer means being interposed between the rear end of the unit swing case 01 and the vehicle body frame positioned thereabove.

In the front portion of the unit swing case 01 and between the cylinder 04 and the support bracket 05 in front of a crank pin 02a of the crank shaft 02 and in the same transverse position (crank center C) as the crank pin 02a, a starter motor 07 is mounted to the unit swing case 01 in such a manner that a drive shaft 07a is parallel to the crank shaft 02.

The starter motor 07 is mounted from the crank center C side (right-hand side) to the front portion of the unit swing case 011a, and a drive gear 010 formed on the drive shaft 07a of the starter motor 07 is meshed with a large-diameter gear 01a of a reduction gear 011 which is rotatably fitted on a reduction gear shaft 09 provided bridgewise between the unit swing case 01 and a left-hand case cover 08, while a small-diameter gear 011b of the reduction gear 011 is meshed with a starting gear 012 provided on the crank shaft 02 side.

Thus, since the starter motor 07 is disposed at the crank center C, it is in the same transverse position as the cylinder 04 and the intake and exhaust mechanisms in the crank case reed valve type. Consequenlty, such mechanisms concerned with basic functions of the internal combustion engine are restricted by the disposed position of the starter motor and hence the freedom of layout is limited.

Besides, since the starter motor 07 is mounted to the outside of the unit swing case 01, it is required to provide a sufficient protective structure against water and mud during vehicular running. Consequently, the number of parts required increases, including O-ring, packing, and oil-seal in the motor.

According to the structure of the starter mechanism of this example, the reduction gear 09 is mounted bridgewise between the unit swing case 01 and the left-hand case cover 08, so it is impossible to make the left-hand case cover 08 floating structure.

If the starter motor is disposed on the lower side of the unit swing case 01, it becomes necessary to make the waterproof structure more strict; besides, such a disposition will exert an influence also upon the bank angle of the two-wheeled motor vehicle.

There also is an example that a starter motor is disposed within a unit swing case (Japanese Patent Publication No. Hei 1-31036). In this example, however, the power transfer system used is a chain system, and there is a marginal space between a crank shaft and a reduction mechanism located behind, in which space is disposed the starter motor. Thus, the said power transfer system is different from the belt power transfer system.

In the above example, moreover, the drive shaft of the starter motor is directed substantially in the longitudinal direction, thus resulting in increasing the number of parts for changing the direction of power.

Further, a reduction gear shaft is mounted bridgewise between the unit swing case and a left-hand case cover floating structure. Thus, the same problems as in the prior art referred to previously are also involved in this example.

In the abstract of JP 57026264, there is disclosed a swing unit according to the preamble of claim 1. There, the starter motor is disposed behind the engine and behind the drive pulley.

The present invention has been accomplished in view of the above points and it is the object of the invention to provide a starter motor mounting/disposing structure in a unit swing internal combustion engine which structure permits a large freedom of layout for the mechanisms concerned with basic functions of the internal combustion engine and which is fully protected against water and mud during vehicular running without requiring any special waterproof structure and is decreased in the number of components.

According to the invention is provided, a swing unit vertically swingable with respect to a vehicle body of a two-wheeled motor vehicle, said swing unit comprising: an internal combustion engine of a belt power transfer type being integrated with said swing unit and having a crankshaft, a belt transfer mechanism having a drive pulley, an engine starter motor having a drive shaft, an engine starter motor mounting/disposing structure, and a swing unit case having a - with respect to the left side of the vehicle -left-hand unit case and a left-hand unit case cover, wherein in said engine starter motor mounting/disposing structure the engine starter motor is disposed within said swing unit case, such that the engine starter motor is mounted to said left-hand unit case in an outer peripheral position of said drive pulley and is covered with said left-hand case cover, and that said drive shaft of said engine starter motor is parallel to said crank shaft, characterized in that said engine starter motor laps over said drive pulley.

Since the starter motor is disposed in an outer peripheral position of the drive pulley in the belt transfer mechanism which position deviates from the crank center, it does not interfere with the cylinder or intake mechanism in the internal combustion engine, thus permitting a large freedom of layout for the mechanisms related to basic functions of the internal combustion engine.

Besides, since the starter motor is mounted within the left-hand unit case and is disposed in the unit swing case while being covered with the left-hand case cover, it is fully protected from water and mud during vehicular running even without using any special waterproof structure. Thus, since it is not required to provide any special component for waterproofing the starter motor, the number of parts required can be so much decreased.

Since the drive shaft of the starter motor is parallel to the crank shaft, it is not necessary to change the direction of power and hence it is possible to decrease the number of parts required for the transfer of power.

Even with the drive shaft parallel to the crank shaft, the starter motor is covered with the left-hand case cover and is accommodated within the unit swing case without increasing the width in the right and left direction, with no influence exerted on the bank angle of the two-wheeled motor vehicle on which the starter motor is mounted.

The overlapping arrangement of the starter motor with respect to the drive pulley allows a compact arrangement of these elements.

Preferably, there also is provided in combination with the above starter motor mounting/disposing structure a starter motor mounting/disposing structure in the unit swing internal combustion engine in which the starter motor is mounted to the left-hand unit case from the left side while a reduction gear is journaled between the starter motor and the left-hand unit case, and the drive shaft of the starter motor is geared through the reduction gear to a starting gear located in an inside position with respect to the drive pulley. Thus, the reduction gear shaft is not supported by the left-hand case cover and therefore the left-hand case cover can be constructed to have a floating support structure; besides, it is easy to mount the starting mechanism.

The following description is now provided about a mode of embodiment of the present invention illustrated in Figs. 1 to 10.
Fig. 1 is a side view of a scooter type two-wheeled motor vehicle according to the mode of embodiment of the present invention;
Fig.2 is a sectional view of an internal combustion engine of the scooter type two-wheeled motor vehicle taken along line II-II in Fig.1;
Fig.3 is a sectional side view of the internal combustion engine taken along a crank center;
Fig.4 is a partial top view of the internal combustion engine;
Fig.5 is a side view of the internal combustion engine with a transmission case cover removed;
Fig.6 is a side view of a crank case portion of a left-hand unit case;
Fig.7 is a right side view of the transmission case cover;
Fig.8 is a side view of a starter motor;
Fig.9 is a view as seen in the direction of arrow IX in Fig.8;
Fig.10 is a sectional view taken along line X-X in Fig.5;

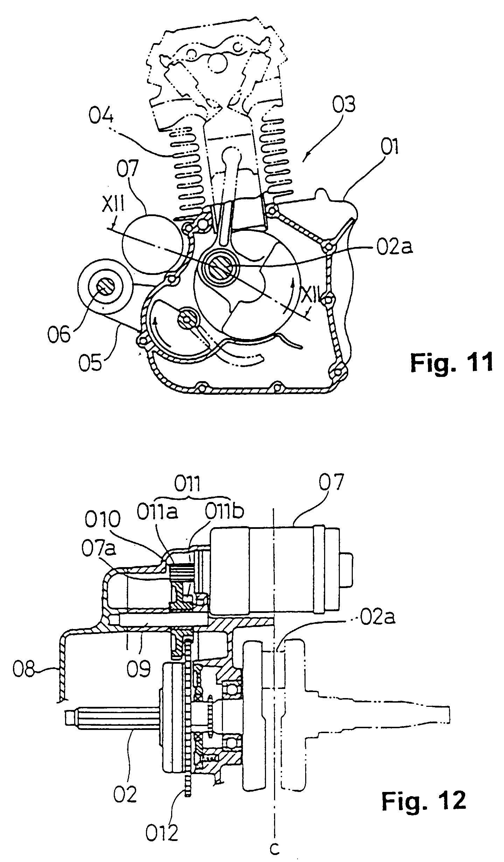

Fig.11 is a sectional side view showing a conventional starter motor mounting/disposing structure; and
Fig.12 is a sectional view taken along line XII-XII in Fig.11.

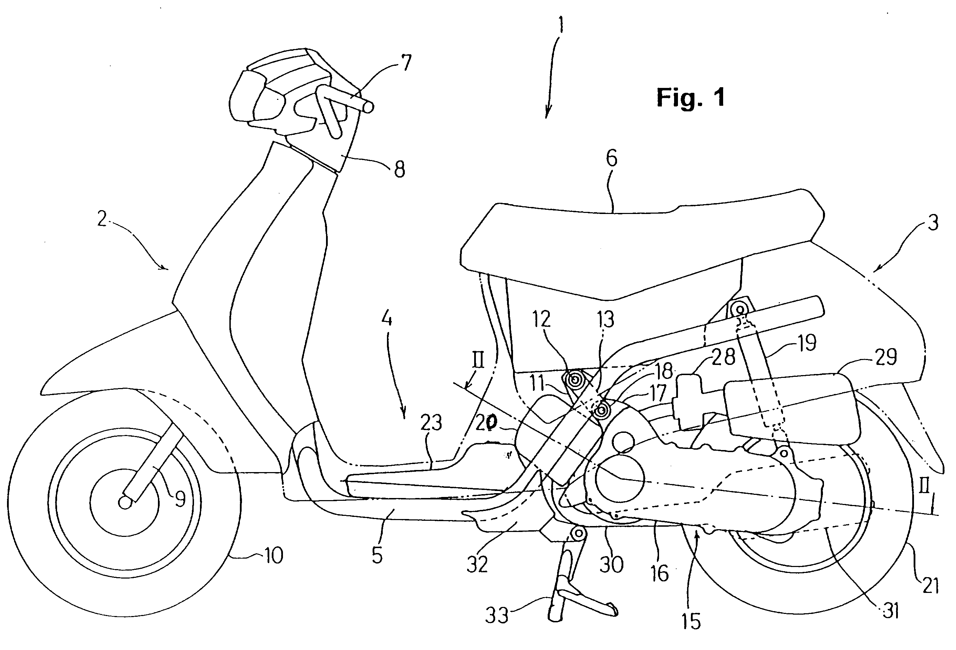

Fig.1 is a side view of a scooter type two-wheeled motor vehicle 1 having a unit swing internal combustion engine according to the present invention.

A vehicular front portion 2 and a vehicular rear portion 3 are connected together through a low floor portion 4. A body frame 5 as a framework of the vehicle extends downward along the vehicular front portion, then branches into two frame portions, which frame portions extend backward below the floor portion 4 and then extend upward and backward along the vehicular rear portion.

A seat 6 is provided on top of the vehicular rear portion 3, while on top of the vehicular front portion 2 and in front of the seat 6 there is provided a steering head 8 having a handle 7.

From the vehicular front portion 2 is suspended a front wheel 10 through a front fork 9, the front wheel 10 being steered by the handle 7.

At obliquely upwardly rising, rear, inclined portions of the body frame 5, brackets 11 are erected right and left in upper positions, and a pivot shaft 12 is mounted bridgewise between both brackets 11. Further, one end of a link 13 is pivotally connected to the pivot shaft 12, while the opposite end of the link 13 is connected through a pivot shaft 18 to a pair of right and left hanger brackets 17 projecting upward at the front portion of a unit swing case 16 of a swing unit 15. Thus, the swing unit 15 can swing up and down while its front portion is supported by the link 13. In a position behind the link 13 is interposed a rear cushion 19 between the swing unit and the body frame 5.

An internal combustion engine 20 is integrated with the front portion of the swing unit 15, while in the rear portion of the swing unit is journaled a rear wheel 21. The power of the internal combustion engine 20 is transferred to the rear wheel 21 by means of a belt transfer mechanism 22 having the function of automatic transmission.

A fuel tank 23 is mounted on the underside of the floor portion 4 by being fixed to the body frame 5.

The internal combustion engine 20 is a two-cycle internal combustion engine, whose cylinder 25 is projecting forward and somewhat upward from the front portion of the unit swing case 16. In a lower position than the link 13 the cylinder 25 extends through the space formed between the right and left frame portions of the body frame 5.

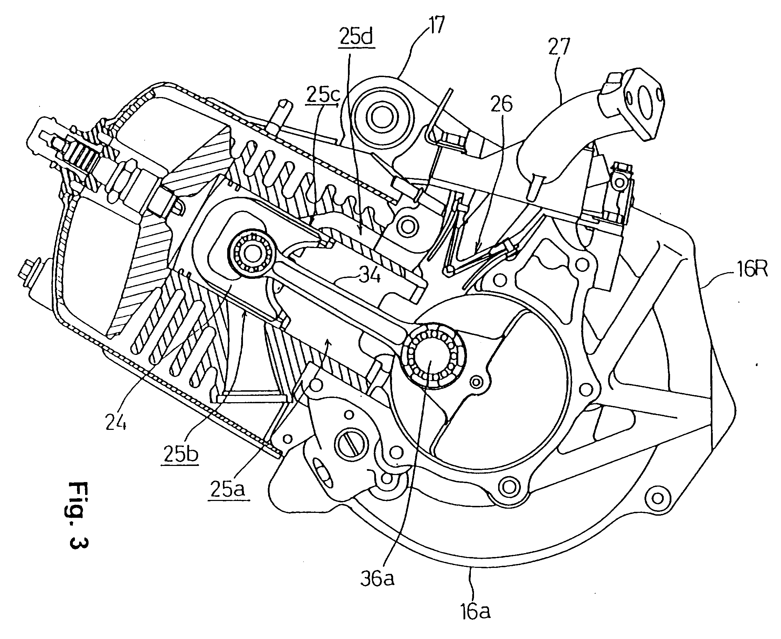

Further, the internal combustion engine 20 adopts a crank case reed valve system with a reed valve 26 being provided in the crank case portion (see Fig.3). An intake pipe 27 extends from an upper position of the crank case portion of the unit swing case 16 and is connected to a carburetor 28. Air is introduced into the carburetor 28 from an air cleaner 29 mounted on the rear portion of unit swing case 16.

An exhaust pipe 30 extends downward from the lower portion of the cylinder 25 of the internal combustion engine 20, then detours backward and rightward below the crank case portion indicated at 16a, and is connected to a muffler 31 disposed on the right-hand side of the vehicle body.

A bracket 32 is projecting backward from the body frame 5 in a position behind the floor portion 4, and a stand 33 is pivotally secured to the tip of the bracket 32 positioned under the front portion of the swing unit 15.

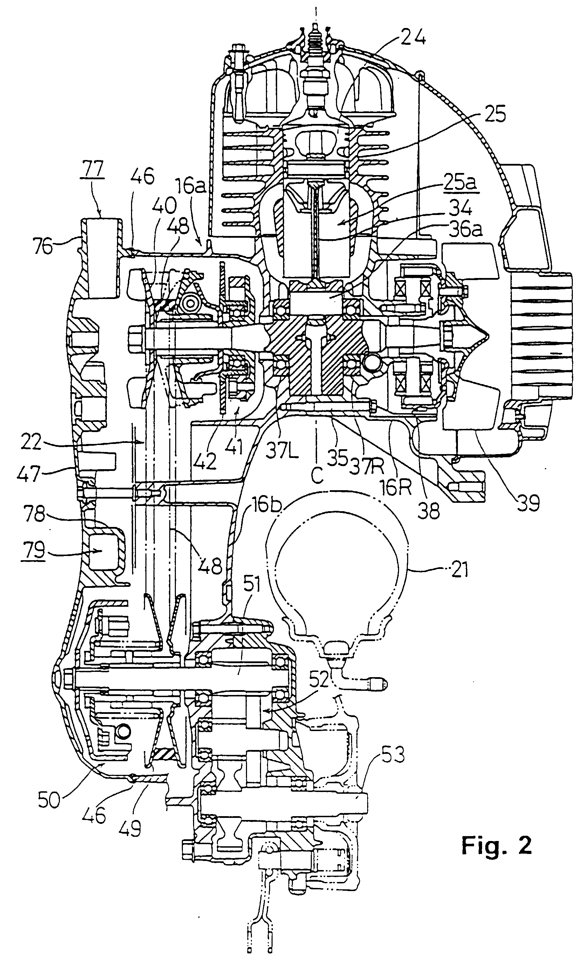

Fig.2 is a sectional view of the swing unit 15 as cut and developed generally along line II-II in Fig.1.

In the front crank case portion 16a the unit swing case 16 is divided into a left-hand unit case 16L and a right-hand unit case 16R, which both cases 16L and 16R are fixed together with bolt 35.

The front portion of the unit swing case 16 corresponds to the crank case portion 16a, with the cylinder 25 projecting therefrom.

Within the crank case portion 16a a crank shaft 36 extends in the right and left direction while being carried rotatably on both main bearing 37R mounted in the right-hand unit case 16R and main bearing 37L mounted in the left-hand unit case 16L, and both ends thereof are projecting outward from the crank case portion 16a.

A connecting rod 34 provides a connection between a piston 24 which reciprocates through a cylinder bore 25a of the cylinder 25 and a crank pin 36a of the crank shaft 36.

Referring now to Fig.3, an exhaust port 25b and a scavenging portion 25c, which are opened and closed by the piston 24, are formed in the cylinder bore 25a. With an ascending stroke of the piston 24, a negative pressure is created within the crank case portion 16a, with the result that the reed valve 26 is opened, allowing the air-fuel mixture to be introduced into the crank case portion 16a through carburetor 28. Then, with a descending stroke of the piston, the mixture is compressed, passes through a scavenging passage 25d and is fed from the scavenging port 25c into the cylinder bore 25a.

The reed valve 26 is disposed nearly at a crank center C in the right and left direction at which the crank pin 36a is positioned. Therefore, the intake pipe 27 contiguous to the reed valve 26 extends generally upward and obliquely leftward from the crank center C and is connected to the carburetor 28.

On the other hand, a generator 38 and a cooling fan 39 are mounted to the right end portion of the crank shaft 36, while a drive pulley 40 in the belt transfer mechanism 22 is mounted to the left end of the crank shaft. Further, a starter one-way clutch 41 is mounted on the right-hand side of the drive pulley 40.

The starter one-way clutch 41 is a roller type one-way clutch, in which a starter driven gear 42 is integrally formed with an inner ring 42a, while an outer ring 44 adapted to relatively rotate with respect to the inner ring 42a through a bearing 43 and integrated with the crank shaft 36 is formed with a cam surface on its inner peripheral surface and with a roller 45 interposed between it and the inner ring 42a.

In the left-hand unit case 16L, a transmission case wall 16b extends backward from the crank case portion 16a, and a left-hand open side is covered with a transmission case cover 47 through a packing 46, with the belt transfer mechanism 22 being accommodated inside the thus-covered portion. The rotation of the crank shaft 36 is transmitted through drive pulley 40, V belt 48, driven pulley 49 and clutch 50 to a driven shaft 51. Further, the rotation of the driven shaft 51 is transmitted through a reduction gearing 52 to a rear axle 53 located at the rear end.

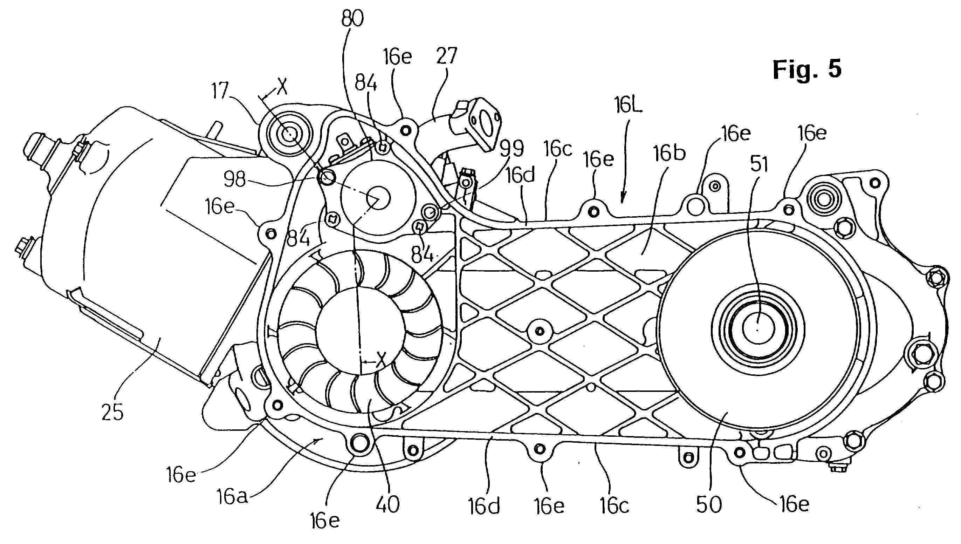

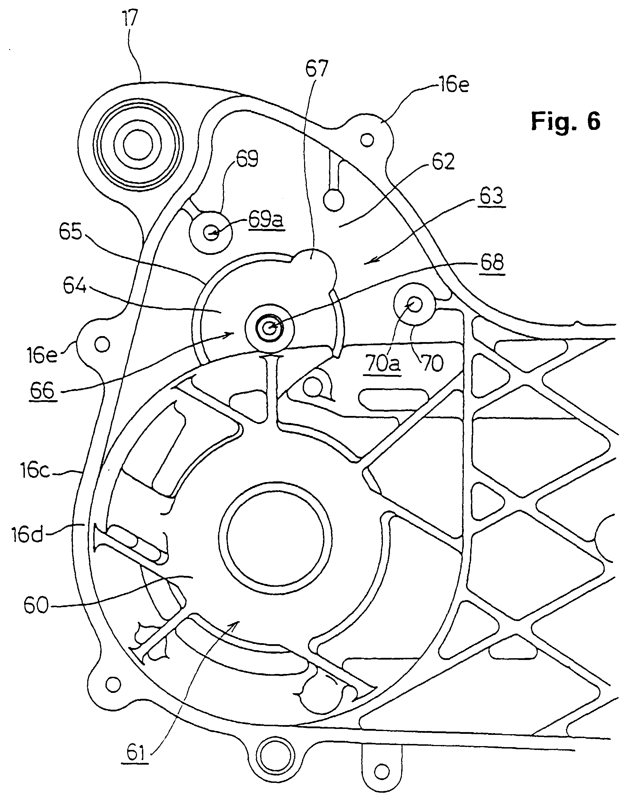

In the left-hand unit case 16L of the unit swing case 16 which is longitudinally elongated and in which the transmission case wall 16b extends backward from the crank case portion 16a, as shown in Figs.5 and 6, an outer peripheral wall 16c surrounds the left-hand opening, and an end face of the outer peripheral wall 16c serves as a mating surface 16d, with outwardly projecting bolt boss portions 16e being formed in plural positions on the outer peripheral wall 16c.

Referring now to Fig.6, in the crank case portion 16a of the left-hand unit case 16L, a side wall 60 is formed circularly around a circular hole in which is fitted the main bearing 37L for supporting the crank shaft 36, and a circular space 61 for receiving therein the starter one-way clutch 41 is defined by both the side wall 60 and a circumferential wall of the side wall. The outer peripheral wall 16c expands triangularly above the circular space 61 to form both a triangular side wall 62 and a triangular space 63 for receiving therein a starter motor 80 which will be described later.

The left-hand hanger bracket 17 is projecting forward from the outer peripheral wall 16c which forms the triangular space 63.

The side wall 60 which forms the circular space 61 is located on an inner side (right-hand side) with respect to the side wall 62 which forms the triangular space 63, and there is a difference in height between the two. Along this stepped portion the side wall 62 which forms the triangular space 63 is formed with a generally semicircular side wall 64 with a medium difference in height, and a cylindrical wall 65 is formed along the circumference of the side wall 64 to define a circular hole 66 in the interior.

Nearly lower half portions of the circular hole 66 and cylindrical wall 65 are cut by the circular space 61, and part of their upper portions is cut in a semicircular shape to form a small circular portion 67.

A bearing hole 68 is formed on the center of the side wall 64 which forms the circular hole 66.

On the side wall 62 of the triangular space 63 bolt boss portions 69 and 70 are projectingly provided in a front, obliquely upper position and a rear position, respectively, with respect to the circular hole 66, with bolt holes 69a and 70a being formed in the bolt boss portions 69 and 70, respectively, in a transversely directing state.

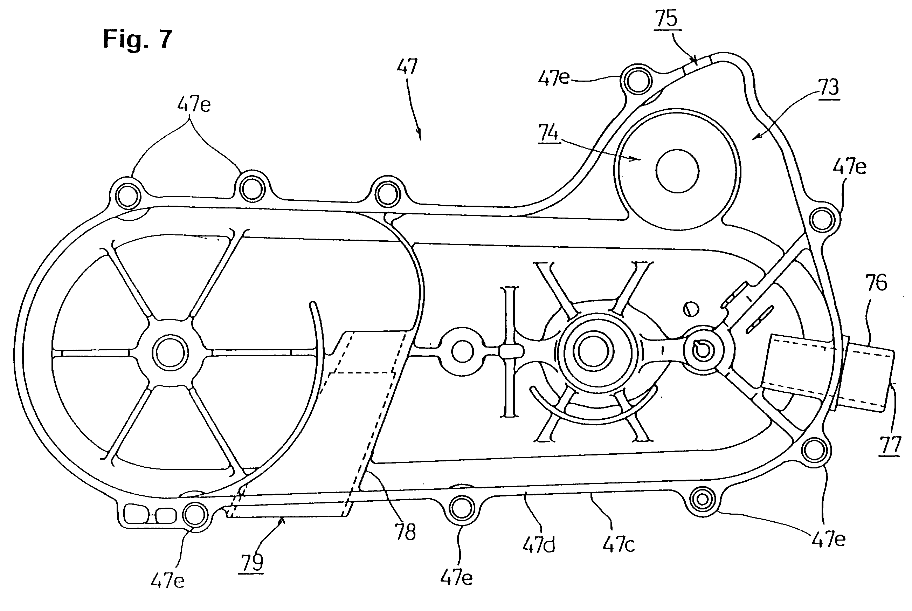

On the other hand, as shown in Figs.2, 7 and 10, the transmission case cover 47 which covers the left-hand opening of the left-hand unit case 16L has a right-hand opening corresponding to the left-hand opening of the left-hand unit case 16L. Along the circumference of a side wall 47a which is long in the front and rear direction there are formed an outer peripheral wall 47c correspondingly to the outer peripheral wall 16c of the left-hand unit case 16L, a mating surface 47d opposedly to the mating surface 16d, and bolt boss portions 47e opposedly to the bolt boss portions 16e.

The front portion of the outer peripheral wall 47c expands upward to form a triangular space 73, with a cutout 75 being formed in an upper position of the rear side out of the two front and rear sides of that triangular shape.

A central portion of the side wall which forms the triangular space 73 expands circularly and somewhat outwards to form a circular space 74.

In the transmission case cover 47, a longitudinally extending cylinder 76 is formed integrally through the front wall portion of the outer peripheral wall 47c. The cylinder 76 is open forward as an outside air inlet 77 to introduce the air present in front of the transmission case cover 47 into the transmission case.

A quadrangular prism body 78 is formed in a somewhat rear position with respect to the center of the side wall 47a. The quadrangular prism body 78, which has an opening in an inner, central height position, extends backward and obliquely downward, passes through the lower wall portion of the outer peripheral wall 47c, and forms a downward exhaust port 79.

The air which has been introduced into the case from the front, outside air inlet 77 cools the transmission mechanism including V belt 48 and is then discharged from the exhaust port 79.

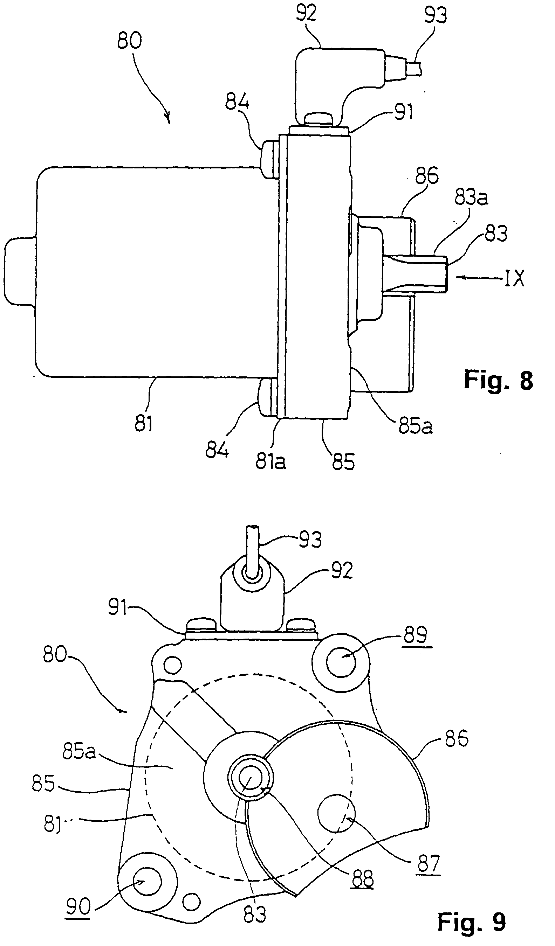

The starter motor 80 is disposed in both triangular space 63 in the crank case portion 16a of the left-hand unit case 16L and corresponding triangular space 73 in the transmission case cover 47. In the starter motor 80, as shown in Figs.8 to 10, an inner rotor 82 is supported within an outer cylinder 81 so as to be rotatably supported on a drive shaft 83. On an open side of the outer cylinder from which the drive shaft 83 projects, a motor bracket 85 is integrally fixed to an outer flange portion 81a with bolts 84.

The drive shaft 83 has a drive gear 83a on its portion extending outward from the motor bracket 85.

On a side face 85a of the motor bracket 85 from which the drive shaft 83 projects, a cylindrical fitting portion 86 is formed projectingly so that an outer peripheral edge thereof overlaps the drive shaft 83, as shown in Fig.9.

The diameter of the fitting portion 86 is approximately equal to the inside diameter of the circular hole 66 formed in the triangular space 63 of the left-hand unit case 16L. In the fitting portion 86, a bearing hole 87 is centrally formed in opposed relation to the central bearing hole 68 of the circular hole 66, and the lower portion is partially cut away like the circular hole 66, further, a small circular portion 88 serving as a passage for the drive shaft 83 is formed by cutting in a semicircular shape in corresponding relation to the small circular portion 67.

In the side face 85a of the motor bracket 85 are formed bolt through holes 89 and 90 in nearly symmetric positions with respect to the drive shaft 83 and in corresponding relation to the bolt holes 69a and 70a of the bolt boss portions 69 and 70 of the left-hand unit case 16L.

An opening formed in part of the peripheral surface of the motor bracket 85 is covered with a cover plate 91, which cover plate is provided with a connecting portion 92 of cord extending from the starter motor 80, with cord 93 extending outward from the connecting portion 92.

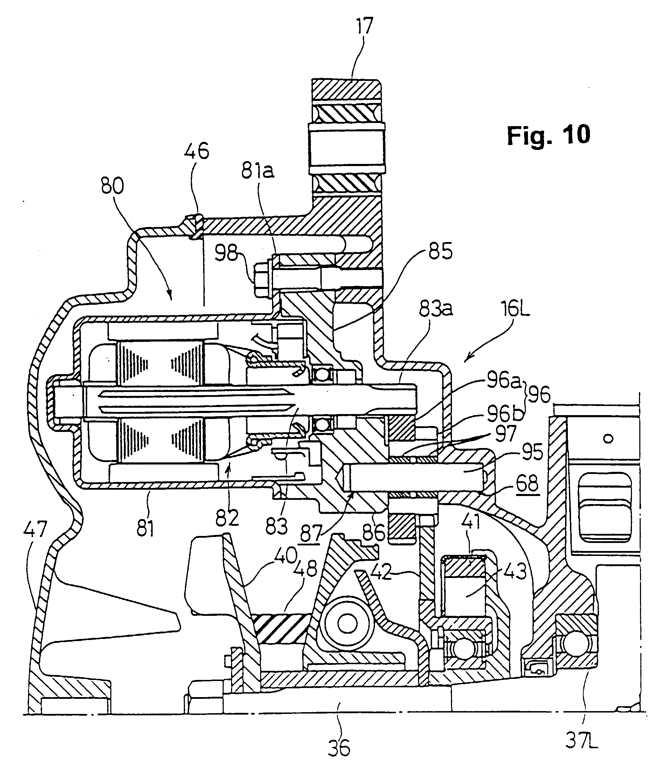

Both ends of a reduction gear shaft 95 are fitted respectively in the bearing hole 68 of the left-hand unit case 16L and the bearing hole 87 of the motor bracket 85 opposed to the bearing hole 68, and a reduction gear 96 is supported between both such fitted portions rotatably through bearing bushes 97 (see Fig.10).

The reduction gear 96 comprises a large-diameter gear 96a and a small-diameter gear 96b which are coaxially integrated with each other.

Therefore, when the starter motor 80 with the motor bracket 85 fixed thereto integrally is to be mounted to the left-hand unit case 16L, first the right end of the reduction gear shaft 95 with the reduction gear 96 fitted thereon through the bearing bushes 97 is fitted into the bearing hole 68 of the left-hand unit case 16L, and at the same time the small-diameter gear 96b is brought into mesh with the starter driven gear 42 of the starter one-way clutch 41 fitted on the crank shaft 36.

Then, with the motor bracket 85 placed on the right-hand side and the drive shaft 83 extending horizontally in the right and left direction, the starter motor 80 is mounted from the left-hand side to the triangular space 63 of the left-hand unit case 16L.

At this time, the other end of the reduction gear shaft 95 one end of which is fitted in the bearing hole 68 is inserted into the bearing hole 87 of the motor bracket 85, and the circular fitting portion 86 of the motor bracket 85 is fitted in the circular hole 66, then aligned and abutted with the same hole, while aligning the projecting drive shaft 83 of the starter motor 80 with the small circular portion 67, whereby the drive gear 83a at the front end portion of the drive shaft 83 comes into mesh with the large-diameter gear 96a of the reduction gear 96.

The bolt through holes 89 and 90 are registered with the front and rear bolt holes 69a and 70a while making adjustment under slight rotation of the motor bracket 85 about the reduction gear shaft 95, and bolts 98 and 99 are threaded into those holes to secure the starter motor 80 to the left-hand unit case 16L.

The drive gear 83a on the drive shaft 83 of the starter motor thus mounted is meshed with the large-diameter gear 96a of the reduction gear 96, while the small-diameter gear 96b integrated with the large-diameter gear 96a is meshed with the starter driven gear 42 of the starter one-way clutch 41 (see Fig.10). Consequenlty, the driving force of the starter motor 80 is transmitted through the reduction gear 96 and the starter one-way clutch 41 to the crank shaft 36 to start up the internal combustion engine 20.

As shown in Fig.10, the starter motor 80 mounted to the left-hand unit case 16L is positioned above and in proximity to the drive pulley 40 in the belt transfer mechanism 22, and the left half thereof is projecting leftward from the left-hand unit case 16L.

Next, the transmission case cover 47 is applied to the left side of the left-hand unit case 16L with packing 46 held between the mating surfaces 16d and 47d.

The packing 46, which is U-shaped in section, is fitted beforehand to the mating surface 47d of the transmission case cover 47 and is then brought into abutment with the mating surface 16d of the left-hand unit case 16L.

The bolt boss portions 47e on the transmission case cover 47 side are registered with the bolt boss portions 16e formed plurally on the outer peripheral wall 16c of the left-hand unit case 16L, and bolts 100 are threadedly inserted through those bosses. In this way the transmission case cover 47 is mounted to the left-hand unit case 16L in a floating support structure through packing 46.

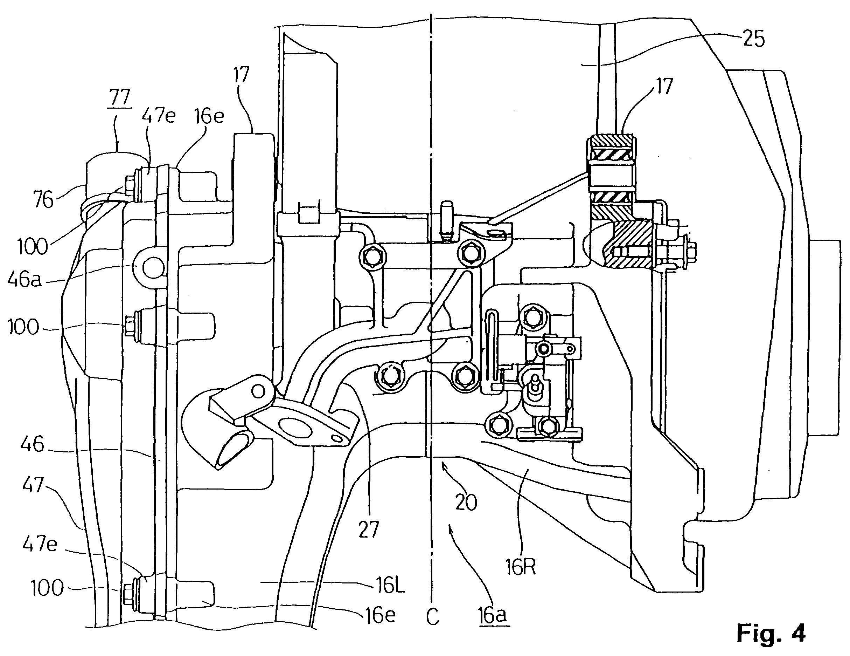

The front upper portion of the packing 46 partially serves as grommet 46a. The grommet 46a is fitted in a cutout 75 formed in the outer peripheral wall 47c of the transmission case cover 47 (see Fig.4), and cord 93 connected to the starter motor 80 extends outward from the grommet 46a.

The starter motor 80 according to this mode of embodiment is mounted and disposed in the above manner.

Since the starter motor 80 is disposed in a position above the outer periphery of the drive pulley 40 in the belt transfer mechanism 22 and deviated leftward from the crank center C, the starter motor does not interfere with the cylinder 25, reed valve 26, intake pipe 27 and exhaust pipe 30 that are positioned on the crank center C. Thus, in connection with the layout associated with basic functions of the internal combustion engine 20, it is possible to eliminate the restrictions based the disposition of the starter motor 80 and thereby improve the freedom to a great extent.

Since the starter motor 80 is disposed within the unit swing case 16 in which the transmission case cover 47 is applied through packing 46 to the left-hand unit case 16L, it is fully protected from water and mud during vehicular running even without using any special waterproof structure in mounting the starter motor itself.

That is, the parts for waterproofing are not needed and hence it is possible to decrease the number of parts required.

Moreover, since the drive shaft 83 of the starter motor 80 is parallel to the crank shaft 36, it is possible to simplify the starting mechanism using the reduction gear 96, and consequently the number of parts required can be decreased.

Although the drive shaft 83 of the starter motor 80 is parallel to the crank shaft 36, since the starter motor is disposed in an upper position within the unit swing case 16, no influence is exerted on the bank angle as a two-wheeled vehicle.

Since the reduction gear shaft 95 is supported by both left-hand unit case 16L and motor bracket 85, the transmission case cover 47 need not support the reduction gear 95. Therefore, as noted previously, the transmission case cover 47 can be mounted as a floating support structure and thus can be given a vibration diminishing effect.

Since the starter motor 80 is mounted separately from the transmission case cover 47, it is easy to perform the starting mechanism mounting work.

According to the present invention, since the starter motor is disposed in a position along the outer periphery of drive pulley in the belt transfer mechanism and deviated from the crank center, it does not interfere with the cylinder and intake mechanism of the associated internal combustion engine, the mechanisms relating to basic functions of the internal combustion engine are given a large freedom of layout.

Further, since the starter motor is mounted within the left-hand unit case, covered with the left-hand case cover, and in this state is disposed within the unit swing case, it is protected to a satisfactory extent from water and mud during vehicular running even without using any special waterproof structure. Besides, it is not necessary to provide any special component for waterproofing of the starter motor, whereby it is possible to reduce the number of parts required.

Since the starter motor drive shaft is in parallel to the crank shaft, it is not necessary to change the direction of power and hence it is possible to decrease the number of parts for power transfer.

Even with the drive shaft parallel to the crank shaft, the starter motor is covered with the left-hand case cover and is accommodated in the unit swing case without increase in its transverse width, so there is no influence exerted on the bank angle as a two-wheeled vehicle.

The starter motor is mounted from the left side to the left-hand unit case while the reduction gear is journaled between it and the left-hand unit case, and its drive shaft is geared through the reduction gear to the starting gear located in an innerer position than the drive pulley. Thus, the reduction gear shaft is not supported by the left-hand case cover, and therefore not only the left-hand case cover is mounted as a floating support structure and thereby can be expected its vibration diminishing effect but also it is easy to mount the starting mechanism.

In summary it is intended to provide a starter motor mounting/disposing structure in a unit swing internal combustion engine which structure permits a large layout freedom for the mechanisms associated with basic functions of the internal combustion engine, is fully protected against water and mud during vehicular running without requiring any special waterproof structure and is decreased in the number of parts required.

In a two-wheeled motor vehicle provided with a unit swing internal combustion engine of a belt power transfer type, a starter motor mounting/disposing structure in the unit swing internal combustion engine in which a starter motor 80 is mounted within a left-hand unit case 16L in a position along the outer periphery of a drive pulley 40 in a belt transfer mechanism in such a manner that a drive shaft 83 thereof is parallel to a crank shaft 36, further, the starter motor is covered with a left-hand case cover 47 and is disposed within a unit swing case 16.

## Claims

1. A swing unit vertically swingable with respect to a vehicle body of a two-wheeled motor vehicle (1), said swing unit comprising:
an internal combustion engine (20) of a belt power transfer type being integrated with said swing unit and having a crankshaft (36),
a belt transfer mechanism (22) having a drive pulley (40),
an engine starter motor (80) having a drive shaft (83), an engine starter motor mounting/disposing structure, and
a swing unit case (16) having a - with respect to the left side of the vehicle - left-hand unit case (16L) and a left-hand unit case cover (47),
wherein in said engine starter motor mounting/disposing structure the engine starter motor (80) is disposed within said swing unit case (16), such
that the engine starter motor is mounted to said left-hand unit case (16L) in an outer peripheral position of said drive pulley (40) and is covered with said left-hand case cover (47), and
that said drive shaft (83) of said engine starter motor (80) is parallel to said crank shaft (36),
characterized in that said engine starter motor (80) laps over said drive pulley (40).

2. A swing unit according to claim 1, wherein said engine starter motor (80) is mounted to said left-hand unit case (16L) from the left side while a reduction gear (96) is journalled between the engine starter motor (80) and the left-hand unit case (16L), and the drive shaft (83) of the engine starter motor (80) is geared through said reduction gear (96) to a starting gear (42) located in an inside position with respect to said drive pulley (40).

## Patentansprüche

1. Schwenkeinheit, die in bezug auf einen Fahrzeugrumpf eines Zweiradkraftfahrzeugs (1) vertikal schwenkbar ist, wobei die Schwenkeinheit umfaßt:
eine Brennkraftmaschine (20) eines Riemenkraftübertragungstyps, die mit der Schwenkeinheit integriert ist und eine Kurbelwelle (36) aufweist,
einen Riemenübertragungsmechanismus (22) mit einer Antriebsrolle (40),
einen Maschinenanlassermotor (80) mit einer Antriebswelle (83),
eine Maschinenanlassermotor-Montage/Positionierungsstruktur und
ein Schwenkeinheit-Gehäuse (16) mit einem - in bezug auf die linke Seite des Fahrzeugs - linken Einheit-Gehäuse (16L) und einer linken Einheit-Gehäuseabdeckung (47),
wobei in der Maschinenanlassermotor-Montage/Positionierungsstruktur der Maschinenanlassermotor (80) innerhalb des Schwenkeinheit-Gehäuses (16) angeordnet ist, derart, daß der Maschinenanlassermotor an dem linken Einheit-Gehäuse (16L) in einer Außenumfangsposition der Antriebsrolle (40) angebracht ist und mit der linken Gehäuseabdeckung (47) abgedeckt ist, und
daß die Antriebswelle (83) des Maschinenanlassermotors (80) parallel zur Kurbelwelle (36) ist,
dadurch gekennzeichnet, daß der Maschinenanlassermotor (80) die Antriebsrolle (40) überlappt.

2. Schwenkeinheit nach Anspruch 1, wobei der Maschinenanlassermotor (80) von der linken Seite her am linken Einheit-Gehäuse (16L) angebracht ist, während ein Untersetzergetriebe (96) zwischen dem Maschinenanlassermotor (80) und dem linken Einheit-Gehäuse (16L) gelagert ist, und wobei die Antriebswelle (83) des Maschinenanlassermotors (80) durch das Untersetzergetriebe (96) mit einem Anlassergetriebe (42) in Eingriff steht, das sich in bezug auf die Antriebsrolle (40) in einer inneren Position befindet.

## Revendications

1. Ensemble pivotant pouvant flotter verticalement par rapport à la carrosserie d'un véhicule (1) à moteur à deux roues, ledit ensemble pivotant comprenant :
un moteur à combustion interne (20) du type à transmission de puissance par courroie étant intégré dans ledit ensemble pivotant et étant pourvu d'un vilebrequin (36),
un mécanisme (22) de transmission à courroie pourvu d'une poulie d'entraînement (40),
un démarreur (80) de moteur pourvu d'un arbre moteur (83),
une structure de montage/positionnement de démarreur pour moteur, et
un carter pivotant (16) pourvu - par rapport au côté gauche du véhicule - d'un carter de gauche (16L) et d'un couvercle (47) de carter de gauche,
dans lequel, dans ladite structure de montage/positionnement de démarreur pour moteur, le démarreur (80) pour moteur est placé à l'intérieur dudit carter pivotant (16), de telle manière
que le démarreur pour moteur est monté sur ledit carter de gauche (16L) dans une position périphérique extérieure de ladite poulie d'entraînement (40) et est recouvert par ledit couvercle (47) dudit carter de gauche, et
que ledit arbre moteur (83) dudit démarreur (80) pour moteur est parallèle audit vilebrequin (36),
caractérisé en ce que ledit démarreur (80) pour moteur chevauche ladite poulie d'entraînement (40).

2. Ensemble pivotant selon la revendication 1, dans lequel ledit démarreur (80) pour moteur est monté sur le carter de gauche (16L) à partir du côté gauche alors qu'un engrenage de réduction (96) tourillonne entre le démarreur (80) pour moteur et le carter de gauche (16L), et que l'arbre moteur (83) du démarreur (80) pour moteur engrène par l'intermédiaire dudit engrenage de réduction (96) avec un pignon de démarrage (42) situé dans une position intérieure par rapport à ladite poulie d'entraînement (40).
